(19) Europäisches Patentamt / European Patent Office / Office européen des brevets

(11) **EP 3 159 958 B1**

(12) **EUROPEAN PATENT SPECIFICATION**

(45) Date of publication and mention of the grant of the patent:
**12.09.2018 Bulletin 2018/37**

(51) Int Cl.:
*C01B 32/20* (2017.01)     *B01J 37/08* (2006.01)
*B01J 27/24* (2006.01)     *H01M 8/10* (2016.01)
*H01M 4/90* (2006.01)     *H01M 4/92* (2006.01)
*H01M 4/96* (2006.01)     *C01B 32/05* (2017.01)

(21) Application number: **15810581.7**

(22) Date of filing: **11.06.2015**

(86) International application number:
**PCT/JP2015/002941**

(87) International publication number:
**WO 2015/194142 (23.12.2015 Gazette 2015/51)**

(54) **CARBON-BASED MATERIAL, ELECTRODE CATALYST, ELECTRODE, ELECTROCHEMICAL DEVICE, FUEL CELL, AND METHOD FOR MANUFACTURING CARBON-BASED MATERIAL**

MATERIAL AUF KOHLENSTOFFBASIS, ELEKTRODENKATALYSATOR, ELEKTRODE, ELEKTROCHEMISCHE VORRICHTUNG, BRENNSTOFFZELLE UND VERFAHREN ZUR HERSTELLUNG VON MATERIAL AUF KOHLENSTOFFBASIS

MATÉRIAU À BASE DE CARBONE, CATALYSEUR D'ÉLECTRODE, ÉLECTRODE, DISPOSITIF ÉLECTROCHIMIQUE, PILE À COMBUSTIBLE, ET PROCÉDÉ DE FABRICATION DE MATÉRIAU À BASE DE CARBONE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.06.2014 JP 2014127282**

(43) Date of publication of application:
**26.04.2017 Bulletin 2017/17**

(73) Proprietor: **Panasonic Corporation**
**Kadoma-shi, Osaka 571-8501 (JP)**

(72) Inventors:
• **KAMAI, Ryo**
**Chuo-ku, Osaka-shi**
**Osaka 540-6207 (JP)**
• **TEI, Go**
**Chuo-ku, Osaka-shi**
**Osaka 540-6207 (JP)**
• **HAYASHI, Takao**
**Chuo-ku, Osaka-shi**
**Osaka 540-6207 (JP)**

(74) Representative: **Müller-Boré & Partner**
**Patentanwälte PartG mbB**
**Friedenheimer Brücke 21**
**80639 München (DE)**

(56) References cited:
EP-A1- 2 792 639     EP-A1- 2 871 154
WO-A1-2013/089026     WO-A1-2014/006908
WO-A1-2014/006908     CN-A- 101 041 431
JP-A- 2003 511 829     JP-A- 2005 205 393
JP-A- 2009 068 080     JP-A- 2012 084 490
JP-A- 2012 110 811     US-A1- 2011 245 071

**Description**

The present invention relates to a carbon-based material, an electrode catalyst and an electrode including the carbon-based material, an electrochemical device and a fuel cell including the electrode.

The oxygen reduction reaction shown below is a cathode reaction in $H_2/O_2$ fuel cells and brine electrolysis, for example, and plays an important role in electrochemical energy conversion devices and the like.

$$O_2 + 4H^+ + 4e^- \rightarrow 2H_2O$$

The oxygen evolution reaction shown below, which is a reverse reaction of the oxygen reduction reaction, plays an important role as an anode reaction in water electrolysis and the like.

$$2H_2O \rightarrow O_2 + 4H^+ + 4e^-$$

In order to promote the oxygen reduction reaction or the oxygen evolution reaction in various devices, noble metal such as platinum, ruthenium oxide, and iridium oxide has been widely and commonly used as a catalyst. However, this kind of noble metal is rare and expensive, and the cost thereof is unstable. Using noble metal poses problems with conservation of resources, constant availability, and a reduction in cost.

In recent years, carbon-based materials doped with metal and nitrogen have been developed and receiving attention as oxygen reduction catalysts as an alternative to noble metal. For example, Non-Patent Literature 1 discloses that a mixture of iron phthalocyanine and phenolic resin is heated at 700°C to 900°C for two to three hours in an inert gas atmosphere, so as to obtain carbon-based crystals containing iron and nitrogen, wherein the carbon-based crystals function as a catalyst for promoting the oxygen reduction reaction. Non-Patent Literature 1 further discloses that iron also has a catalytic function to promote crystallization of the carbon-based crystals during the process of catalyst formation.

Non-Patent Literature 2 also discloses carbon-based crystals capable of functioning as a catalyst. In particular, a mixture of graphene oxide, iron chloride, and graphitic carbon nitride ($g-C_3N_4$) is chemically reduced to graphene with a reducing agent. The mixture is then heated at 800°C for two hours in an argon atmosphere, so as to obtain the carbon-based crystals containing iron and nitrogen. Non-Patent Literature 2 further discloses that the carbon-based crystals function to promote the oxygen reduction reaction.

In order to ensure sufficient catalytic activity of such catalysts, the number of reaction active centers is necessarily increased such that the area of each graphene sheet composing the carbon-based crystals is increased. Further, each graphene sheet composing the carbon-based crystals is required to be doped with a larger amount of iron and nitrogen. The conventional cases have increased the heating temperature or heating time in an inert gas atmosphere during the manufacture of the carbon-based crystals in order to deal with such necessity.

Patent Literature 1 and Non-Patent Literature 3 disclose a catalyst in which a metal complex is supported on a carbon support, and a method of highly dispersing the metal complex on the surface of the carbon support in order to improve the activity of the catalyst.

Patent Literature 1: Japanese Unexamined Patent Application Publication No. 2006-035186

Non-Patent Literature 1 : Carbon, Vol. 48, No. 9 (02 August 2010), pp. 2613-2624
Non-Patent Literature 2 : Chem. Mater., 2011. Vol. 23, pp. 3421-3428
Non-Patent Literature 3 : J. Power Sources 2011, Vol. 196, pp. 2519-2529

WO 2014/006908 A1 describes a carbon-based material, an electrode catalyst, an electrode, a gas diffusion electrode, an electrochemical device, a fuel battery, and a process for producing a carbon-based material.

WO 2013/089026 A1 describes a carbon-based material, an electrode catalyst, an oxygen reduction electrode catalyst, a gas diffusion electrode, an aqueous solution electrolytic device, and a production method for a carbon-based material.

CN 101 041 431 A describes a preparation method for nitrogen and transition metal element doped carbon nano particles.

US 2011/245071 A1 describes a nitrogen-containing carbon alloy, a process of producing the same, and a carbon catalyst containing the same.

The catalytic activity of catalysts used for electrodes has been improved in recent years accordingly. The catalytic activity, however, is still required to be further improved in order to commercialize fuel cells using such catalysts as power sources for used in, for example, portable computers, mobile communication devices, and vehicles, which require high energy density.

The methods described in the literatures are intended to change density of the active centers of the catalysts, without changing the structure of the active centers. Namely, the methods described above, which are not intended to control the function of the active centers of the catalysts, fundamentally hinder a further improvement of the catalytic activity.

The present invention has been made in view of the above-described conventional problems. An object of the present invention is to provide a carbon-based material having high catalytic activity and easy to manufacture, an electrode catalyst and an electrode including the carbon-based material, an electrochemical device and a fuel cell including the electrode.

In order to solve the problems described above, a carbon-based material according to a first aspect of the present invention includes: graphite or amorphous carbon particles; nonmetal atoms with which one of the graphite and the amorphous carbon particles is doped, the nonmetal atoms being nitrogen atoms; and metal atoms with which one of the graphite and the amorphous carbon particles is doped. A distance between the metal atoms and the nonmetal atoms is 1.4 Å or less. A component belonging to the nonmetal atoms doped into a graphite state measured by X-ray photoelectron spectroscopy is present in a proportion of 10% or greater and less than 50% of the total doped nonmetal atoms.

[Fig. 1] Fig. 1 is a cross-sectional view showing an example of a configuration of a fuel cell according to the present embodiment.

[Fig. 2] Fig. 2 is a cross-sectional view showing an example of a gas diffusion electrode according to the present embodiment.

[Fig. 3] Fig. 3 is a flowchart showing a process of manufacturing a carbon-based material.

[Fig. 4] Fig. 4 is a graph showing a voltammogram of carbon-based materials of the respective examples in which a 0.5 M $H_2SO_4$ aqueous solution is used as an electrolysis solution.

[Fig. 5] Fig. 5 is a graph showing a voltammogram of the carbon-based materials of the respective examples in which a 0.1 M NaOH aqueous solution is used as an electrolysis solution.

[Fig. 6] Fig. 6 is a graph showing radial distribution functions derived from Fe K-edge EXAFS spectra obtained for the carbon-based materials of the respective examples.

[Fig. 7A] Fig. 7A is a graph showing spectra obtained by XPS measurement performed on the carbon-based materials of the respective examples.

[Fig. 7B] Fig. 7B is a graph showing the spectra in Fig. 7A obtained for the carbon-based materials of the respective examples, which are offset from each other for more clear indication.

Hereinafter, a carbon-based material, an electrode catalyst, an electrode, an electrochemical device, and a fuel cell according to the present embodiment as well as a general method for manufacturing a carbon-based material will be described with reference to the drawings. The embodiment described below indicates preferred specific examples. The numerical values, shapes, materials, elements, and arrangement and connection of the respective elements described in the following embodiment are examples and not intended to limit the embodiment.

[1. Configuration of Fuel cell]

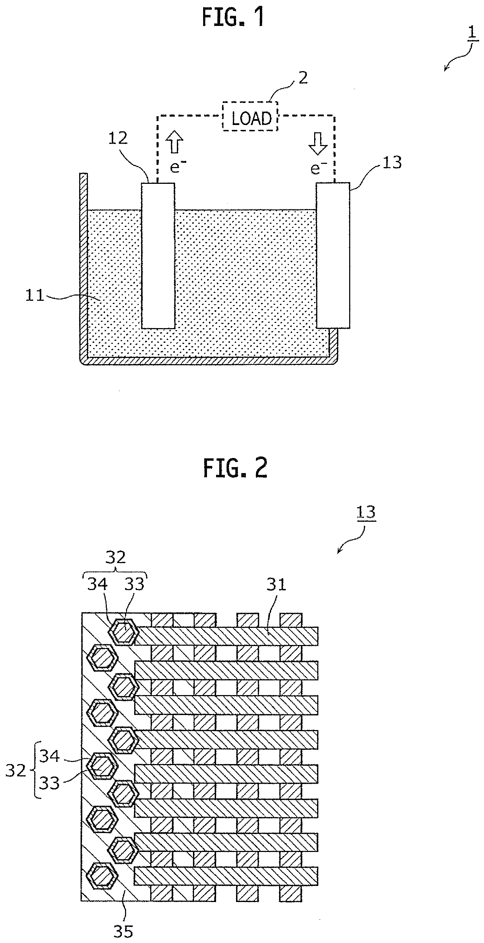

A configuration of a fuel cell including a carbon-based material according to the present embodiment is described below with reference to Fig. 1 and Fig. 2. Fig. 1 is a cross-sectional view showing an example of the configuration of the fuel cell according to the present embodiment. Fig. 1 also shows a load to which a current is supplied when the load is connected to the fuel cell. Fig. 2 is a cross-sectional view showing an example of a gas diffusion electrode according to the present embodiment.

The fuel cell 1 includes the carbon-based material, as described in detail below, as an electrode catalyst. The fuel cell 1 is a primary battery capable of discharging electricity, and examples thereof include a hydrogen fuel cell such as a polymer electrolyte fuel cell (PEFC) and a phosphoric acid fuel cell (PAFC), and a microbial fuel cell (MFC).

A hydrogen fuel cell obtains electric energy from hydrogen and oxygen through a reverse reaction of electrolysis of water. Such a fuel cell is known as PEFC, PAFC, an alkaline fuel cell (AFC), a molten carbonate fuel cell (MCFC), and a solid oxide fuel cell (SOFC), for example. The fuel cell 1 according to the present embodiment is preferably PEFC or PAFC. PEFC is a fuel cell using a proton-conducting ion-exchange membrane as an electrolyte material, and PAFC is a fuel cell including a matrix layer impregnated with phosphoric acid ($H_3PO_4$) using as an electrolyte material.

As shown in Fig. 1, the fuel cell 1 includes an electrolysis solution 11 (electrolyte material), for example. The fuel cell 1 further includes an anode 12 (a fuel electrode, a negative electrode, or a minus electrode), and a cathode 13 (an air electrode, a positive electrode, or a plus electrode). The anode 12 discharges electrons to the load 2 through an oxygen evolution reaction. The cathode 13 receives electrons flowing from the load 2 through an oxygen reduction reaction.

According to the present embodiment, the cathode 13 is configured as a gas diffusion electrode, and includes the carbon-based material as described in detail below. In particular, the carbon-based material is included as an electrode catalyst in the cathode 13.

A gas diffusion electrode can preferably be applied to an electrode for use in, for example, a hydrogen fuel cell and MFC. The fuel cell 1 according to the present embodiment may have a known configuration but is only required to include the cathode 13 serving as a gas diffusion electrode including the electrode catalyst including the carbon-based material. For example, the fuel cell 1 may have a configuration described in "Fuel cell Technology"; The Institute of Electrical Engineers of Japan, Special Research Committee for Next-Generation Fuel cell Power Generation System, Ohmsha, Ltd., H17, and Watanabe, K., J. Biosci. Bioeng., 2008,. 106: 528-536.

As described above, the cathode 13 is configured as the gas diffusion electrode and includes the carbon-based material, but is not limited thereto. In the fuel cell 1 according to the present embodiment, the gas diffusion electrode including the electrode catalyst including the carbon-based material may be used as either the anode 12 or the cathode 13.

For example, when the fuel cell 1 according to the present embodiment is a hydrogen fuel cell, the gas diffusion electrode including the electrode catalyst including the carbon-based material may be used as the anode 12. The electrode catalyst included in the anode 12 promotes an oxidation reaction ($H_2 \rightarrow 2H^+ + 2e^-$) of hydrogen gas serving as fuel, so as to donate electrons to the anode 12. The gas diffusion electrode including the electrode catalyst including the carbon-based material may also be used as the cathode 13. The electrode catalyst included in the cathode 13 promotes a reduction reaction ($1/2O_2 + 2H^+ + 2e^- \rightarrow H_2O$) of oxygen gas serving as an oxidizing agent.

When the fuel cell 1 according to the present embodiment is MFC, the anode 12 receives electrons directly from electron-donating microbes. Thus, the gas diffusion electrode is mainly used as a cathode that causes the same electrode reaction as used in a hydrogen fuel cell.

[2. Configuration of Gas diffusion electrode (Cathode)]

Next, a configuration of the cathode 13 configured as the gas diffusion electrode is described in detail below.

As shown in Fig. 2, the cathode 13 includes a porous support 31 having electrical conductivity, and a carbon-based material 32 serving as an electrode catalyst supported on the support 31. The carbon-based material 32 has a particle shape including a core layer 33 and a doped layer 34, and is supported on the support 31 via a binder 35. The cathode 13 may further include a support body as necessary.

At least part of the carbon-based material 32 is only required to be provided on the surface of the cathode 13 in order to promote the oxidation-reduction reaction involved with reaction gas, electron-donating microbes, and the like.

The support 31 is an element having electrical conductivity and capable of supporting the carbon-based material as a catalyst thereon. The support 31 may include any material which exhibits such properties. Examples of materials included in the support 31 include a carbon-based substance, an electrically conductive polymer, a semiconductor, and metal.

The carbon-based substance is a substance including carbon as a component. Examples of such carbon-based substances include graphite, activated carbon, carbon powder (such as carbon black, Vulcan (registered trademark) XC-72R, acetylene black, furnace black, Denka Black (registered trademark)), carbon fiber (such as graphite felt, carbon wool, and carbon fabric), a carbon plate, carbon paper, and a carbon disc. Another example may be a substance having a microstructure such as carbon nanotube, carbon nanohorn, and carbon nanoclusters. These carbon-based substances may be used alone or in combination of two or more thereof.

The electrically conductive polymer is a generic term for high molecular compounds having electrical conductivity. Examples of electrically conductive polymers include polymers each including a single monomer or two or more monomers, each of which is aniline, aminophenol, diaminophenol, pyrrole, thiophene, paraphenylene, fluorene, furan, acetylene, or a derivative thereof. More specific examples thereof include polyaniline, polyaminophenol, polydiaminophenol, polypyrrole, polythiophene, polyparaphenylene, polyfluorene, polyfuran, and polyacetylene. These electrically conductive polymers may be used alone or in combination of two or more thereof.

The support 31 is preferably, but not necessarily, the carbon-based substance in view of availability, costs, corrosion resistance, and durability. The porous support 31 can function as a gas diffusion layer. A gas-liquid interface is provided in the gas diffusion layer.

The support 31 may include a single material, or two or more materials in combination. For example, the support 31 may include a combination of the carbon-based substance and the electrically conductive polymer, or a combination of carbon powder and carbon paper which are the carbon-based substances.

The shape of the support 31 may have any shape that can support the carbon-based material 32 as a catalyst on the surface thereof. In view of further improvement of the catalytic activity (mass activity) per unit mass in the cathode 13, the support 31 preferably has a fiber-like shape having a large specific surface area per unit mass. As the specific surface area is larger, the support 31 typically can ensure a larger supporting area, increase the dispersibility of the catalyst component on the surface of the support 31, and support a larger amount of the catalyst component on the surface thereof. Therefore, the support 31 preferably has a fiber-like shape such as carbon fiber.

The fuel cell 1 may include a conducting wire for electrically connecting the electrodes of the fuel cell 1 with an external circuit (for example, the load 2). The support 31 therefore may partly include connection terminals connected to the conducting wire. The connection terminals of the support 31 may be formed of silver paste or carbon paste.

The carbon-based material 32 as a catalyst may be supported on the support 31 by a conventionally-known method in the art. For example, the carbon-based material 32 may be fixed to the surface of the support 31 via an appropriate binder 35. The binder 35 preferably has electrical conductivity. Specific examples of the binder 35 used include an electrically conductive polymer solution obtained such that an electrically conductive polymer is dissolved in an appropriate solvent, and a dispersion liquid of polytetrafluoroethylene (PTFE).

The carbon-based material 32 may be supported on the support 31 such that the binder 35 in a liquid state is applied or sprayed on the surface of the support 31 and/or the surface of the carbon-based material 32, and the support 31 and the carbon-based material 32 are then mixed together. Alternatively, the carbon-based material 32 may be supported on the support 31 such that the carbon-based material 32 is soaked in a solution of the binder 35, and the soaking solution is applied to the support 31, and then dried. In the latter case, the carbon-based material 32 used preferably has a particle shape.

A method of preparing the cathode 13 configured as the gas diffusion electrode may be a conventionally-known method in the art. For example, a support supporting a carbon-based material as a catalyst is mixed with a dispersion liquid of PTFE to prepare a mixed liquid. Thereafter, the mixed liquid is dried, molded into an appropriate shape, and then subjected to heat treatment, so as to form the gas diffusion electrode. The dispersion liquid of PTFE may be a solution of Nafion (registered trademark) available from DuPont.

As in the case of PEFC and PAFC, the electrode may be formed on a surface of a solid polymer electrolyte membrane or an electrolyte matrix layer in the following manner. For example, the mixed liquid as prepared above is dried, and then molded into a sheet, so as to form an electrode sheet. Subsequently, a membrane-bond surface of the electrode sheet is coated or impregnated with, for example, a solution of fluoric ion-exchange resin having proton conductivity. Thereafter, the electrode sheet is bonded to the solid polymer electrolyte membrane or the electrolyte matrix layer by hot pressing. Examples of such fluoric ion-exchange resins having proton conductivity include Nafion, and Flemion (registered trademark) available from Asahi Glass Co., Ltd.

Alternatively, a surface of a support body formed of, for example, carbon paper having electrical conductivity may be coated with the mixed liquid as prepared above, and then subjected to heat treatment, so as to form the gas diffusion electrode.

The gas diffusion electrode may also be formed as follows. First, a solution of ion-exchange resin having proton conductivity is mixed with the support 31 supporting the carbon-based material 32, so as to prepare mixed ink or mixed slurry. Subsequently, the mixed ink or mixed slurry thus obtained is applied to a surface of a support body, a solid polymer electrolyte membrane, or an electrolyte matrix layer. Thereafter, the mixed ink or mixed slurry is dried, so as to obtain the gas diffusion electrode. The solution of the ion-exchange resin having proton conductivity may be a solution of Nafion.

According to the present embodiment, the gas diffusion electrode is used as the cathode 13 for the fuel cell 1, as described above, but may also be applied to cathodes for various kinds of electrochemical devices. Examples of electrochemical devices include a device for water electrolysis, a carbon dioxide permeation device, a device for brine electrolysis, and a metal-air battery (such as a lithium-air battery).

According to the present embodiment, the electrode catalyst including the carbon-based material 32 is used as an oxygen reduction catalyst, as described above, but may also be used as an oxygen evolution catalyst. Namely, the electrode including the carbon-based material 32 may be used as an anode. Examples of such anodes include an anode used in a device for water electrolysis, and an anode used in an electrolytic bath of sulfate.

[3. Carbon-based material]

Next, the carbon-based material 32 used as an electrode catalyst for the cathode 13 is described in detail below.

[3-1. Configuration]

A configuration of the carbon-based material 32 is described first. The carbon-based material 32 according to the present embodiment includes graphite or amorphous carbon particles doped with metal atoms and nonmetal atoms being nitrogen atoms. The carbon-based material 32 preferably includes, as a main component, graphite or amorphous carbon particles doped with metal atoms and nonmetal atoms being nitrogen atoms. Namely, the carbon-based material 32 preferably includes 50 mol% or more of the graphite or amorphous carbon particles in total, the graphite or amorphous carbon particles being doped with both the nonmetal atoms and the metal atoms.

The carbon-based material 32 may include both graphite and amorphous carbon particles. The carbon-based material 32 in this case preferably includes 50 mol% or more of the graphite and amorphous carbon particles in total, the graphite and amorphous carbon particles being doped with both the nonmetal atoms and the metal atoms.

The carbon-based material 32 may be doped with any kind of metal atoms. The metal atoms are preferably at least one metal selected from the group consisting of titanium (Ti), vanadium (V), chromium (Cr), manganese (Mn), iron (Fe), cobalt (Co), nickel (Ni), copper (Cu), zirconium (Zr), niobium (Nb), molybdenum (Mo), ruthenium (Ru), rhodium (Rh), palladium (Pd), silver (Ag), hafnium (Hf), tantalum (Ta), tungsten (W), rhenium (Re), osmium (Os), iridium (Ir), platinum (Pt), and gold (Au). The carbon-based material 32 doped with these kinds of the metal atoms exhibits high performance as a catalyst particularly for enhancing the oxygen reduction reaction. The carbon-based material 33 can therefore ensure high catalytic activity as a catalyst for the cathode 13.

The amount of the doped metal atoms introduced into the carbon-based material 32 may be appropriately determined so that the carbon-based material 32 can exhibit high catalytic activity.

The doped nonmetal atoms introduced into the carbon-based material 32 are nitrogen atoms. The amount of the doped nonmetal atoms introduced into the carbon-based material 32 may also be appropriately determined so that the carbon-based material 32 can exhibit high catalytic activity.

In the present embodiment, a distance between the doped metal atoms and the doped nonmetal atoms introduced into the carbon-based material 32 is 1.4 Å or less. The distance between these atoms may be obtained in the following manner.

In particular, when the metal atoms are other than platinum atoms, the distance between the metal atoms and the nonmetal atoms is obtained according to a maximum peak position of a radial distribution function which appears around a coordinate bond distance between the metal atoms and the nonmetal atoms, the radial distribution function being obtained such that a K-edge extended X-ray absorption fine structure (EXAFS) of the metal atoms is subjected to Fourier transform.

When the metal atoms are platinum atoms, the distance between the platinum atoms and the nonmetal atoms is obtained according to a maximum peak position of a radial distribution function which appears around a coordinate bond distance between the platinum atoms and the nonmetal atoms, the radial distribution function being obtained such that an LIII-edge extended X-ray absorption fine structure (EXAFS) of the platinum atoms is subjected to Fourier transform.

The EXAFS is described in detail below. The EXAFS is a fine structure of a spectrum which appears on a higher energy side of approximately 100 eV or higher than an X-ray absorption edge in an X-ray absorption fine structure (XAFS) spectrum. An absorption near-edge structure in the XAFS spectrum is called an X-ray absorption near-edge structure (XANES).

Typically, a vibrational component of EXAFS (vibrational intensity of an absorption spectrum vibrating according to a wave number k of X-ray electrons) $\chi(k)$ is represented by the following formula.

[Math 1]

$$\chi(k) = \sum_i \frac{A_i}{R_i} \exp(-2k^2 \sigma i^2) \exp(-2R_i/\lambda) \sin(2kR_i + \delta_i) f_i(\pi)$$

In the formula, $Ri$ represents a distance from absorption atoms to the $i$-th scattering atoms, $Ai$ represents the number of the $i$-th scattering atoms, and $\sigma i$ represents a mean square amplitude in thermal vibration in the $i$-th scattering atoms. Further, $\lambda$ represents a mean free path of photoelectrons, $\delta i$ represents a phase shift by scattering in the $i$-th scattering atoms, and $fi(\pi)$ represents an atomic scattering factor backscattered at a scattering angle of 180° in the $i$-th scattering atoms. The radial distribution function can be obtained such that the component $\chi(k)$ is subjected to Fourier transform.

When the K-edge EXAFS spectrum is measured with regard to the metal atoms of the carbon-based material 32, the object to be measured is only the carbon-based material 32. Other substances present independently of the carbon-based material 32, such as substances mixed in or adhering to the carbon-based material 32, are excluded from the object to be measured. Therefore, the content of substances present independently of the carbon-based material 32 is required to sufficiently be reduced such that the carbon-based material 32 is preliminarily washed with an acidic aqueous solution when the K-edge EXAFS spectrum is measured with regard to the metal atoms of the carbon-based material 32.

The method of obtaining EXAFS and the radial distribution function is described in more detail below. The EXAFS spectrum is measured by permeametry by use of an ion chamber detector, for example. The measurement of the spectrum requires preliminary calibration of an energy axis per measurement. The calibration of the energy axis is implemented, for example, such that a value of a local maximum at the first peak is set to 8980.3 eV in a graph in which energy is defined as the X axis and absorbance is defined as the Y axis with regard to Cu K-edge XANES of Cu metal.

The radial distribution function is derived from the XAFS spectrum data by the following method. First, background noise is deducted from the XAFS spectrum by a usual method. Next, a baseline is determined at which an intensity axis is zero such that a mean intensity in the range of -150 eV to -30 eV results in zero on the basis of absorption edge energy (E0). In addition, a baseline is determined at which an intensity axis is 1 such that a mean intensity in the range of +150 eV to +550 eV results in 1. The two baselines are determined such that the absorption edge energy (E0) is located in the middle of the two baselines on a rising spectrum adjacent to the absorption edge energy (E0). Subsequently, the two baselines are replaced by straight lines to adjust the waveforms. These operations replace the energy (unit: eV) axis with a wave number (k, unit: 1/Å) axis, so as to extract the vibration component $\chi(k)$ of EXAFS represented by the formula described above.

Thereafter, the spectrum obtained by the operations described above is multiplied by the cube of k, and then subjected to Fourier transform. The range of k subjected to Fourier transform is set to 2.5 to 11.5 (1/Å). Accordingly, the radial distribution function is obtained in which the intensity is defined as the Y axis and the distance $Ri$ between the atoms is defined as the X axis. The distance between the adjacent atoms can be confirmed according to the position at which the peak appears in the radial distribution function. Namely, the distance between the nonmetal atoms and the adjacent metal atoms with which the carbon-based material 32 is doped can be confirmed. The distance between the respective atoms is obtained particularly according to the maximum peak position in the radial distribution function which appears around the coordinate bond distance between the metal atoms and the nonmetal atoms.

Accordingly, the distance between the doped nonmetal atoms and the doped metal atoms introduced into the carbon-based material 32 according to the present embodiment is obtained according to EXAFS.

Next, the intensity of bond between the doped metal atoms introduced into the carbon-based material 32 according to the present embodiment and carbon atoms, and the intensity of bond between the doped nonmetal atoms and carbon atoms are described below.

According to the present embodiment, a component belonging to the nonmetal atoms doped into a graphite state (graphitic component) measured by X-ray photoelectron spectroscopy (XPS), is present in the proportion of 10% or greater and less than 50% of the total doped nonmetal atoms.

According to the present embodiment, the nonmetal atoms include nitrogen atoms, and the metal atoms preferably include at least one of iron atoms and cobalt atoms. When the metal atoms include iron atoms, a peak top in an Fe2p(3/2) spectrum of the carbon-based material measured by the X-ray photoelectron spectroscopy (XPS) is preferably less than 710 eV.

The XPS measurement is implemented such that a characteristic X-ray of A1 is used as a light source in a vacuum of $3 \times 10^{-8}$ Pa. When the carbon-based material 32 is measured by XPS, an element composition in a fixed region on the surface layer of the carbon-based material 32 can be confirmed. The XPS measurement can also estimate a composition ratio in the doped structure of the doped nonmetal atoms in a fixed region. For example, when the nonmetal atoms include nitrogen atoms, an XPS spectrum on a Is orbital of the nitrogen atoms is subjected to curve fitting such that the nitrogen atoms doped into a graphite state is set to 401.0$\pm$0.1 eV, and the nitrogen atoms doped into a pyridine state is set to 398.5$\pm$0.1 eV. Further, the XPS spectrum on the Is orbital of the nitrogen atoms is subjected to curve fitting such that the nitrogen atoms doped into a pyrrole state is set to 400.0$\pm$0.1 eV, and the nitrogen atoms present as an oxide is set to 404.0$\pm$0.3 eV. According to a ratio of the areas of the separated peaks, a proportion of the component belonging to the nitrogen atoms doped into a graphite state with respect to the total doped nitrogen atoms is measured.

The XPS measurement can further analyze an electron state of the element composition. For example, when the doped metal atoms introduced into the carbon-based material include iron atoms, the intensity of the coordinate bond between the iron atoms and the carbon atoms can be analyzed based on a peak derived from the 2p(3/2) electron orbital of the iron atoms.

Upon the XPS measurement of the carbon-based material 32, the content of substances present independently of the carbon-based material 32 is sufficiently reduced such that the carbon-based material 32 is preliminarily washed with an acidic aqueous solution. The acid washing is implemented, for example, such that the carbon-based material 32 is dispersed in pure water for 30 minutes by use of a homogenizer, and the dispersed carbon-based material 32 is then poured into 2M sulfuric acid and stirred at 80°C for three hours.

According to the present embodiment, the nonmetal atoms and the metal atoms are recognized as being present mainly on the surface layer of the carbon-based material 32. In the process of manufacturing the carbon-based material 32, when the graphite or amorphous carbon particles are doped with the metal atoms and the nonmetal atoms, the metal atoms and the nonmetal atoms are considered not to easily penetrate deeply into the graphite or amorphous carbon particles. In other words, the nonmetal atoms and the metal atoms are considered to dope the graphite or amorphous carbon particles on the surface layer thereof. Therefore, the carbon-based material is considered to include the core layer 33 substantially only including the graphite or amorphous carbon particles, and the doped layer 34 covering the core layer 33 and including the nonmetal atoms and the metal atoms.

According to measurement results obtained by cyclic voltammetry (voltammogram) of the carbon-based material 32 of the present embodiment, a peak derived from the oxidation-reduction reaction of the doped metal atoms (ions) introduced into the carbon-based material 32 appears in the voltammogram. Namely, the doping of the carbon-based material 32 doped with the metal atoms can be confirmed based on the presence of the peak derived from the oxidation-reduction reaction of the metal atoms. An average value (an oxidation-reduction potential) of a potential at a peak at the time of the oxidation reaction and a potential at a peak at the time of the reduction reaction in the voltammogram shifts depending on the type of the doped nonmetal atoms introduced into the carbon-based material 32. Namely, the doping of the carbon-based material 32 doped with the nonmetal atoms can be confirmed based on the value of the oxidation-reduction potential or the shifted level. In addition, because the electrochemical reaction is considered to be caused on the surface of the carbon-based material 32, the metal atoms and the nonmetal atoms can be assessed as being present on the surface layer of the carbon-based material 32.

As described above, the carbon-based material 32 according to the present embodiment includes the graphite or amorphous carbon particles. The carbon-based material 32 includes the doped nonmetal atoms introduced into the graphite or amorphous carbon particles, the nonmetal atoms being nitrogen atoms, and includes the doped metal atoms introduced into the graphite or amorphous carbon particles. The distance between the metal atom and the nonmetal atom is 1.4 Å or less. A component belonging to the nonmetal atoms doped into a graphite state measured by X-ray photoelectron spectroscopy is present in a proportion of 10% or greater and less than 50% of the total doped nonmetal atoms.

The carbon-based material 32 having the configuration described above exhibits high catalytic performance when used as an electrode catalyst as described above. Namely, the carbon-based material 32 can ensure high catalytic activity. This is probably because electron density of the active center of the catalyst in this case increases, as compared with a case in which the distance between the metal atoms and the nonmetal atoms is greater than 1.4 Å. The carbon-based material 32 particularly when used as an oxygen reduction catalyst and used as an oxygen evolution catalyst can exhibit high catalytic performance. The carbon-based material 32 of this type can easily be manufactured through a manufacture process described below.

The distance between the metal atoms and the nonmetal atoms may be 1.2 Å or greater and 1.4 Å or less. Setting the distance to 1.2 Å or greater facilitates the manufacture of the carbon-based material 32.

According to the present embodiment, the component belonging to the nonmetal atoms doped into a graphite state (the graphitic component) measured by the X-ray photoelectron spectroscopy (XPS) is present in the proportion of 10% or greater and less than 50% of the total doped nonmetal atoms.

As used herein, the phrase "nonmetal atoms doped into a graphite state" is meant to encompass a state where nonmetal atoms are replaced with carbon in a six-membered ring structure linked by an sp2 orbital. When the proportion of the component belonging to the nonmetal atoms doped into a graphite state (the graphitic component) is 10% or greater of the total doped nonmetal atoms, high durability can be achieved, as compared with a case in which the proportion is less than 10%. When the proportion is 50% or greater, the amount of the doped nonmetal atoms introduced into the carbon-based material 32 may decrease. The decrease of the amount of the nonmetal atoms may cause a reduction in catalytic activity when the carbon-based material 32 is used as an electrode catalyst. Therefore, the proportion set to 10% or greater and less than 50% can ensure high catalytic activity and high durability when the carbon-based material 32 is used as an electrode catalyst.

More particularly, when the nonmetal atoms are nitrogen atoms, the doped nitrogen atoms introduced into the carbon-based material 32 may result in three types of states: a pyridine state, a pyrrole state, and a graphite state, as described above. The nitrogen atoms doped into a graphite state have the highest binding energy, and tend to be present in a high proportion when processed at a high baking temperature. However, the volatilized amount of the nitrogen component is apt to increase when the baking temperature for the carbon-based material 32 increases. Thus, there is a trade-off between the increase in proportion of the nitrogen atoms doped into a graphite state and the entire content of the nitrogen atoms. In order to increase the proportion of nitrogen doped into a graphite state to 50% or greater, the nitrogen atoms are necessarily subjected to heat treatment at a significantly high temperature, or subjected to heat treatment at a high temperature for long hours. Such heat treatment may greatly decrease the entire content of the doped nitrogen atoms introduced into the carbon-based material 32. Accordingly, in order to keep a balance between the proportion of the nonmetal atoms doped into a graphite state and the entire content of the nonmetal atoms, the component belonging to the nonmetal atoms doped into a graphite state is present in the proportion of 10% or greater and less than 50% of the total doped nonmetal atoms.

According to the present embodiment, the combination of the doped metal atoms and the doped nonmetal atoms introduced into the carbon-based material 32 is selected as appropriate. However, the nonmetal atoms include nitrogen atoms, and the metal atoms preferably include at least one of iron atoms and cobalt atoms. The carbon-based material 32 having these atoms can particularly exhibit high catalytic activity when used as an electrode catalyst (an oxygen reduction catalyst) for the cathode 13. The nonmetal atoms only include nitrogen atoms, and the metal atoms may only include one of iron atoms and cobalt atoms.

According to the present embodiment, when the doped metal atoms introduced into the carbon-based material 32 are iron atoms, the peak top in the Fe2p(3/2) spectrum of the carbon-based material 32 measured by XPS is preferably less than 710 eV.

As described above, when the doped metal atoms introduced into the carbon-based material 32 are iron atoms, the intensity of the coordinate bond between the iron atoms and the carbon atoms is analyzed based on the peak top in the spectrum derived from the 2p(3/2) electron orbital of the iron atoms, among spectra obtained by XPS measurement. Namely, the expression "the peak top in the Fe2p(3/2) spectrum measured by XPS is preferably less than 710 eV" represents a state in which backdonation of electrons from the nitrogen atoms to the iron atoms is large in the iron-nitrogen coordinate bond. The performance of donation of electrons to oxygen molecules of the carbon-based material 32 is therefore increased. Accordingly, the carbon-based material 32 with the peak top in the spectrum below 710 eV can exhibit higher catalytic activity than the carbon-based material in which the peak top in the spectrum 710 eV or greater.

[3-2. Manufacture Method]

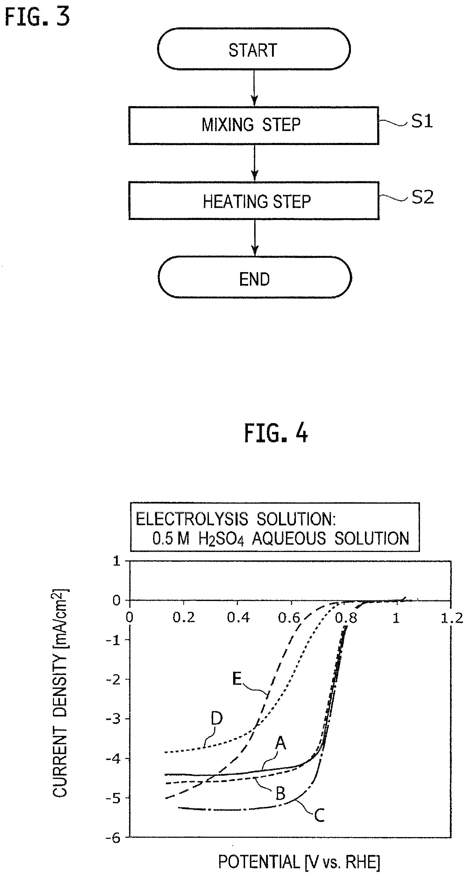

Next, in general, a method for manufacturing the carbon-based material 32 is described below with reference to Fig. 3. Fig. 3 is a flowchart showing a process of manufacturing the carbon-based material 32.

The method for manufacturing the carbon-based material 32 includes a step (S1) of mixing a compound including nonmetal atoms and metal atoms coordinated with the nonmetal atoms, with a carbon-source raw material including at least one of graphite and amorphous carbon particles. The manufacture method further includes a step (S2) of heating the mixture of the compound and the carbon-source raw material at 800°C or higher and 1000°C or lower. The nonmetal atoms are nitrogen atoms. The carbon-based material 32 is thus manufactured through the process described above.

The mixing step (S1) and the heating step (S2) may be carried out independently, or carried out substantially at the same time. Namely, the compound and the carbon-source raw material may be heated while being mixed.

A specific example of the amorphous carbon particles may be carbon black of one kind selected from the group consisting of Vulcan XC-72R, acetylene black, Ketjenblack (registered trademark), furnace black, and Denka Black.

The compound in the mixture may be any compound which includes the nonmetal atoms doped into at least one of the graphite and the amorphous carbon particles, and the metal atoms coordinated with the nonmetal atoms. The compound in the mixture is therefore preferably a complex including the nonmetal atoms and the metal atoms coordinated with the nonmetal atoms. The compound preferably further includes at least one of porphyrin ring and phthalocyanine ring. An example of such a compound may be an iron-protoporphyrin IX complex.

The use of this complex as the compound in the mixture can facilitate the manufacture of the carbon-based material in which the distance between the doped metal atom and the doped nonmetal atom is 1.4 Å or less. The reason for this is presumed as follows.

In the mixing step (S1), when the compound including the metal atoms coordinated with the nonmetal atoms is used, the metal atoms and the nonmetal atoms doped are considered to be easily introduced into at least one of the graphite and the amorphous carbon particles. This probably leads to a coordinate bond between the metal atom and the nonmetal atom in the carbon-based material. The catalytic activity of the carbon-based material is considered to appear at positions where the nonmetal atoms and the metal atoms come closer to each other in the carbon-based material. The use of the compound including the metal atoms and the complex is considered to improve the catalytic activity of the carbon-based material.

As described above, according to the measurement results of the carbon-based material obtained by cyclic voltammetry, the oxidation-reduction potential shifts depending on the type of the doped nonmetal atoms introduced into the carbon-based material. The shift of the oxidation-reduction potential is probably because the state of electrons of the metal atoms changes due to the coordinate bond between the metal atoms and the nonmetal atoms. In other words, the coordinate bond between the doped metal atoms and the doped nonmetal atoms introduced into the carbon-based material can be estimated when the oxidation-reduction potential of the carbon-based material shifts.

In the mixing step (S1), for example, the mixture of the compound and the carbon-source raw material is prepared as follows. First, the compound and the carbon-source raw material are mixed together, and a solvent such as ethanol is added thereto as necessary. The mixed material is dispersed by ultrasonic dispersing method. The material is then heated and dried at an appropriate temperature (for example, 60°C). As a result, the mixture including the compound and the carbon-source raw material is obtained.

The mixture thus obtained is then heated under high temperature conditions. The heating of the mixture is carried out by an appropriate method. For example, the mixture may be heated in a reducing atmosphere or in an inert gas atmosphere. The carbon-based material is thus doped with the metal atoms and the nonmetal atoms. The heating temperature during the heating treatment is in the range of 800°C or higher and 1000° or lower, as described above.

When the carbon-source raw material is the graphite, the heating of the mixture, under the high temperature conditions, is implemented preferably for 45 seconds or longer and shorter than 600 seconds.

When the carbon-source raw material is the amorphous carbon particles, the heating of the mixture, under the high temperature conditions, is implemented preferably for 30 seconds or longer and shorter than 300 seconds. The reduced heating time can lead to efficiency in manufacture of the carbon-based material 32, which further enhances the catalytic activity of the carbon-based material 32.

In the heating processing, a heating rate for the mixture at the beginning of heating is preferably 50°C/s or greater. The rapidly-heated mixture results in further enhancement of the catalytic activity of the carbon-based material 32. Namely, the amount of an inert metal compound and metal crystals causing a reduction in catalytic activity is considered to be further reduced in the carbon-based material 32, so as to lead to an improvement of the catalytic activity.

The carbon-based material 32 may be subjected to acid washing. The acid washing is implemented such that the carbon-based material 32 is dispersed in pure water for 30 minutes by use of a homogenizer, and the dispersed carbon-based material 32 is poured into 2M sulfuric acid, and stirred at 80°C for three hours, followed by isolation. The carbon-based material 32 subjected to acid washing does not show a large change in overvoltage, as compared with a case not subjected to acid washing, when the carbon-based material 32 is used as a catalyst for a fuel cell. However, the durability of the carbon-based material 32 subjected to acid washing can be improved because the acid washing minimizes elution of the metal component.

The manufacture method described above can provide the carbon-based material 32 in which the distance between the doped metal atoms and the doped nonmetal atoms is 1.4 Å or less.

The carbon-based material 32 is manufactured in such a manner as to heat the mixture of the compound including the nonmetal atoms, the metal atoms coordinated with the nonmetal atoms, and at least one of porphyrin ring and phthalocyanine ring, mixed with the carbon-source raw material including at least one of the graphite and the amorphous carbon particles. The mixture is heated at 800°C or higher and 1000°C or lower. The manufacture method described above can provide the carbon-based material 32 in which the distance between the doped metal atoms and the doped nonmetal atoms is 1.4 Å or less.

EXAMPLES

Hereinafter, the present embodiment will be described in more detail with reference to Examples and Comparative Examples, but is not intended to be limited to these examples.

[Example 1]

To a container, 1g of particles of flake graphite (median diameter: 6 μm), 1g of an iron-protoporphyrin IX complex, and 50 mL of N,N-dimethylformamide were placed, so as to prepare a mixed liquid. The mixed liquid was subjected to ultrasonic dispersion, and dried by a dryer at 60°C. A sample of the mixture including the flake graphite and the iron-protoporphyrin IX complex as indicated in Table 1 was prepared.

The sample was filled into one end of a quartz pipe, and the quartz pipe was then purged with argon. The quartz pipe was placed in a furnace heated at 900°C, and removed therefrom after 70 seconds. A heating rate of the sample at the beginning of heating was adjusted to 300°C/s such that the quartz pipe was inserted into the furnace while taking three seconds. The sample was then cooled by introducing argon gas through the quartz pipe.

The sample was dispersed in pure water for 30 minutes by use of a homogenizer, and this carbon-based material was poured into 2M sulfuric acid and stirred at 80°C for three hours. The carbon-based material was washed with acid, and further washed with water and dried. Accordingly, the carbon-based material (Sample A) as indicated in Table 2 was obtained.

More particularly, the carbon-based material (Sample A) of Example 1 included the flake graphite (graphite) as a main component, and was doped with N atoms (nonmetal atoms) and Fe atoms (metal atoms), in which the distance between the N atoms and the Fe atoms was 1.38 Å. The component belonging to the N atoms doped into a graphite state measured by XPS was present in the proportion of 19% of the total doped N atoms.

[Example 2] (Reference Example)

The baking was implemented differently from Example 1 such that the quartz pipe was placed in a furnace heated at 600°C, and removed therefrom after two hours. Except for this step, the carbon-based material (Sample B) as indicated in Table 2 was obtained by the same method under the same conditions as Example 1.

More particularly, the carbon-based material (Sample B) of Example 2 included the flake graphite (graphite) as a main component, and was doped with N atoms (nonmetal atoms) and Fe atoms (metal atoms), in which the distance between the N atoms and the Fe atoms was 1.39 Å. The component belonging to the N atoms doped into a graphite state measured by XPS was present in the proportion of 8% of the total doped N atoms.

[Example 3]

The carbon-based material (Sample C) as indicated in Table 2 was obtained by the same method under the same conditions as Example 1 except that the carbon-source raw material used in Example 1 was changed to 1 g of Ketjenblack EC600JD (available from Lion Corporation).

More particularly, the carbon-based material (Sample C) of Example 3 included Ketjenblack (amorphous carbon particles) as a main component, and was doped with N atoms (nonmetal atoms) and Fe atoms (metal atoms), in which the distance between the N atoms and the Fe atoms was 1.38 Å. The component belonging to the N atoms doped into a graphite state measured by XPS was present in the proportion of 18% of the total doped N atoms.

[Comparative Example 1]

To a container, 1g of particles of flake graphite (median diameter: 6 μm), a 0.1 M iron(III) chloride aqueous solution, and a 0.15 M pentaethylenehexamine ethanol solution were placed, so as to prepare a mixed liquid. The amount of the 0.1 M iron(III) chloride aqueous solution used was adjusted such that a proportion of the iron atoms to the flake graphite was 10 mass%. The mixed liquid was subjected to ultrasonic dispersion, and dried by a dryer at 60°C. A sample including the flake graphite, iron(III) chloride, and pentaethylenehexamine was thus prepared.

The sample was then subjected to processing by the same method under the same conditions as Example 1, so that the carbon-based material (Sample D) as indicated in Table 2 was obtained.

More particularly, the carbon-based material (Sample D) of Comparative Example 1 included the flake graphite (graphite) as a main component, and was doped with N atoms (nonmetal atoms) and Fe atoms (metal atoms), in which the distance between the N atoms and the Fe atoms was 1.62 Å. The component belonging to the N atoms doped into a graphite state measured by XPS was present in the proportion of 32% of the total doped N atoms.

[Comparative Example 2]

The baking was implemented differently from Example 1 such that the quartz pipe was placed in a furnace heated at 900°C, and removed therefrom after two hours. Except for this step, the carbon-based material (Sample E) as indicated in Table 2 was obtained by the same method under the same conditions as Example 1.

More particularly, the carbon-based material (Sample E) of Comparative Example 2 included the flake graphite (graphite) as a main component, and was doped with N atoms (nonmetal atoms) and Fe atoms (metal atoms), in which the distance between the N atoms and the Fe atoms was 1.47 Å. The component belonging to the N atoms doped into a graphite state measured by XPS was present in the proportion of 49% of the total doped N atoms.

The conditions for preparing the carbon-based materials (Samples A to E) of Examples 1 to 3 and Comparative Examples 1 and 2 are summarized in Table 1. The configurations of the carbon-based materials obtained in the respective examples are shown in Table 2. Table 2 shown below indicates the items with no data by "N/A (not available)".

[Table 1]

| | Substance in Sample before Baking | | Baking Temperature (°C) | Baking Time (sec) |
|---|---|---|---|---|
| | Carbon-Source Material | Other | | |
| Example 1 (Sample A) | Flake Graphite | Iron-Protoporphyrin IX Complex | 900 | 70 |
| Example 2 (Sample B) | Flake Graphite | Iron-Protoporphyrin IX Graphite Complex | 600 | 7200 |
| Example 3 (Sample C) | Ketjenblack | Iron-Protoporphyrin IX Complex | 900 | 70 |
| Comparative Example 1 (Sample D) | Flake Graphite | Iron(III) Chloride Pentaethylenehexamine | 900 | 70 |
| Comparative Example 2 (Sample E) | Flake Graphite | Iron-Protoporphyrin IX Complex | 900 | 7200 |

[Table 2]

| | Main Component | Doped Atom (N onmetal) | Doped Atom (Metal) | Distance between Atoms (Å) | [Graphitic-N] / [Total N] (%) | Deterioration after Potential Cycle Test (%) |
|---|---|---|---|---|---|---|
| Example 1 (Sample A) | Graphite | N | Fe | 1.38 | 19.0 | 15.00 |
| Example 2 (Sample B) | Graphite | N | Fe | 1.39 | 8.0 | 36.00 |
| Example 3 (Sample C) | Amorphous Carbon Particles | N | Fe | 1.38 | 18.0 | N/A |
| Comparative Example 1 (Sample D) | Grraphite | N | Fe | 1.62 | 32.0 | N/A |
| Comparative Example 2 (Sample E) | Graphite | N | Fe | 1.47 | 49.0 | N/A |

[Evaluation Test]

The respective evaluation tests on the carbon-based materials (Samples A to E) prepared in Examples 1 to 3 and Comparative Examples 1 and 2 when used as an electrode catalyst, are described below.

[1. Oxygen Reduction Activity Evaluation]

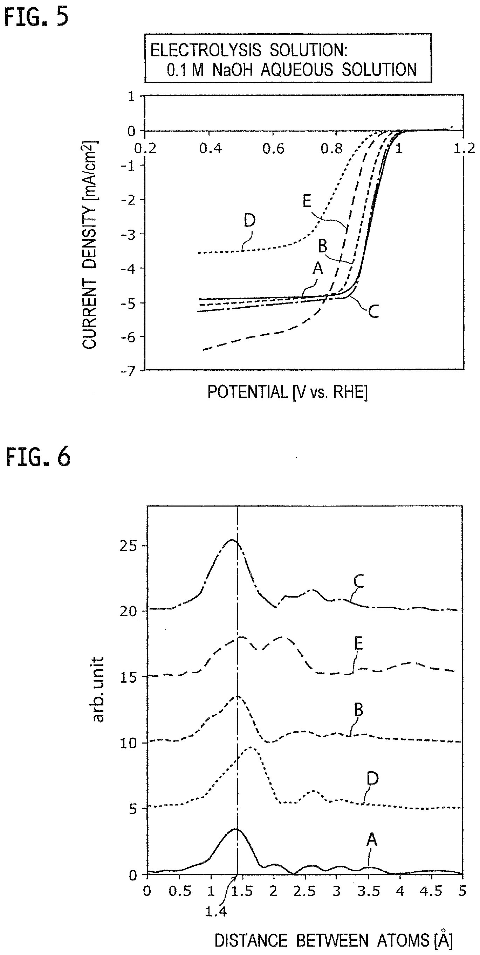

The evaluation results of the oxygen reduction activity of the carbon-based materials (Samples A to E) prepared in Examples 1 to 3 and Comparative Examples 1 and 2 when used as an electrode catalyst, are described below with reference to Fig. 4 and Fig. 5. Fig. 4 is a graph showing a voltammogram in the case in which a 0.5 M $H_2SO_4$ aqueous solution was used as an electrolysis solution for the carbon-based materials (Samples A to E) in the respective examples. Fig. 5 is a graph showing a voltammogram in the case in which a 0.1 M NaOH aqueous solution was used as an electrolysis solution for the carbon-based materials (Samples A to E) in the respective examples.

First, 5 mg of each carbon-based material, 175 mL of ethanol, and 47.5 mL of a 5%-Nafion dispersion liquid were mixed together, and the mixed liquid was subjected to ultrasonic dispersion.

Subsequently, 7 mL of the mixed liquid was added dropwise onto a glassy carbon (GC) rotary disk electrode with 0.196 cm$^2$, followed by drying. As a result, about 800 mg/cm$^2$ of the carbon-based material was attached onto the rotary disk electrode. Thereafter, rotary disk electrode voltammetry was implemented with the rotary disk electrode thus obtained in the respective cases of using the 0.5 M $H_2SO_4$ aqueous solution as an electrolysis solution and using the 0.1 M NaOH aqueous solution as an electrolysis solution. The rotary disk electrode voltammetry was implemented under the conditions of a rotation rate of 1500 rpm and a sweeping rate of 10 mV/s.

As shown in Fig. 4, it was confirmed that, in the carbon-based materials (Samples A to C) of Examples 1 to 3 used as an electrode catalyst, the oxygen reduction reaction in the $H_2SO_4$ aqueous solution started progressing at an electrode potential of around 0.8 V (vs. RHE). As shown in Fig. 5, it was confirmed that, in the carbon-based materials (Samples A to C) of Examples 1 to 3 used as an electrode catalyst, the oxygen reduction reaction in the NaOH aqueous solution started progressing at an electrode potential of around 0.95 V (vs. RHE). In the both electrolysis solutions, an onset potential of the respective carbon-based materials (Samples A to C) of Examples 1 to 3 when used as an electrode catalyst was superior to that of the respective carbon-based materials (Samples D and E) of Comparative Examples 1 and 2 when used as an electrode catalyst. As used herein, the onset potential is a potential at which the oxygen reduction reaction starts.

Further, the carbon-based materials (Samples A to C) of Examples 1 to 3 when used as an electrode catalyst showed greater current density at an electrode potential of 0.4 V in the $H_2SO_4$ aqueous solution than the carbon-based materials (Samples D and E) of Comparative Examples 1 and 2. The carbon-based materials (Samples A to C) of Examples 1 to 3 when used as an electrode catalyst also showed greater current density at an electrode potential of 0.9 V in the NaOH aqueous solution than the carbon-based materials (Samples D and E) of Comparative Examples 1 and 2. The carbon-based materials of Examples 1 to 3 thus exhibited the highest-level performance as a non-platinum oxygen reduction catalyst.

It was therefore confirmed that Examples 1 to 3 (Samples A to C) in which the distance between the doped metal atoms and the doped nonmetal atoms was 1.4 Å or less could ensure high catalytic activity.

[2. Measurement of X-ray Absorption Fine Structure (EXAFS)]

The EXAFS measurement performed on the carbon-based materials (Samples A to E) prepared in Examples 1 to 3 and Comparative Examples 1 and 2 is described below.

The EXAFS measurement performed on the carbon-based materials (Samples A to E) prepared in Examples 1 to 3 and Comparative Examples 1 and 2 was implemented by use of synchrotron radiation on the beamline BL01B1 at Spring-8 as a large synchrotron radiation facility. The measurement was implemented by permeametry as a detection method by use of a Si(111) double crystal spectrometer, a converging mirror, and an ion chamber as a detector. Before the measurement, each carbon-based material was formed into a pellet form with a hand press. Further, Fe K-edge EXAFS in XAFS spectra was subjected to Fourier transform, so as to obtain radial distribution functions. For the Fourier transform, "ATHENA package" was used as a computer program. For background processing, "AUTOBK program" was used as a computer program.

The measurement results of EXAFS are shown in Fig. 6. Fig. 6 is a graph showing the radial distribution functions derived from the Fe K-edge EXAFS spectra obtained for the carbon-based materials (Samples A to E) of the respective examples. Fig. 6 shows the derivation results offset from each other in order to clearly indicate the respective functions obtained.

According to Fig. 6, the carbon-based materials (Samples A to C) of Examples 1 to 3 had a distance R between the atoms which was 1.4 Å or less obtained in the EXAFS measurement. More particularly, the distance between the atoms obtained in the carbon-based materials (Samples A to E) of Examples 1 to 3 and Comparative Examples 1 and 2 through the EXAFS measurement, resulted in the values as indicated in Table 2 above. It was confirmed, as shown in Fig. 4, that Examples 1 to 3 (Samples A to C) in which the distance between the Fe atoms (metal atoms) and the N atoms (nonmetal atoms) was 1.4 Å or less could ensure high oxygen reduction activity in the 0.5 M $H_2SO_4$ aqueous solution. It was therefore confirmed that these carbon-based materials could ensure high catalytic activity.

[3. Measurement of X-ray photoelectron spectroscopy (XPS)]

The XPS measurement performed on the carbon-based materials (Samples A to E) prepared in Examples 1 to 3 and Comparative Examples 1 and 2 is described below.

The XPS measurement performed on the carbon-based materials (Samples A to E) of the Examples and Comparative Examples was implemented by use of a characteristic X-ray of Al as a light source in a vacuum of $3 \times 10^{-8}$ Pa. For the measurement, each carbon-based material was pressed and fixed on an In foil.

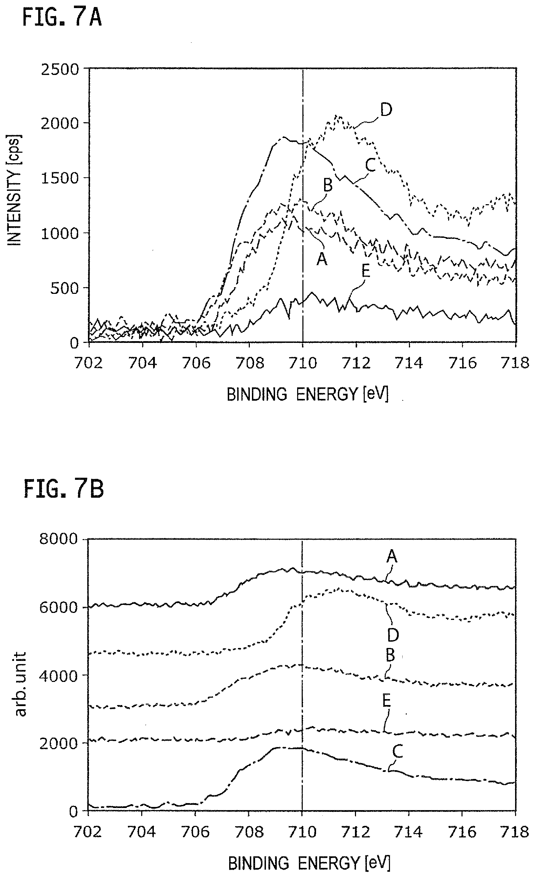

The results of the XPS measurement are shown in the section "[Graphitic-N]/[Total N]" in Table 2, and Figs. 7A and 7B. The section "[Graphitic-N]/[Total N]" in Table 2 indicates the proportion of the component belonging to the nitrogen atoms (nonmetal atoms) doped into a graphite state to the total doped nitrogen atoms (the total nonmetal atoms). Fig. 7A is a graph showing spectra obtained by the XPS measurement performed on the carbon-based materials (Samples A to E) of the respective examples. Fig. 7B is a graph showing the spectra in Fig. 7A obtained for the carbon-based materials of the respective examples, which are offset from each other for more clear indication. Both Fig. 7A and Fig. 7B show the enlarged spectra, measured by XPS, around the peak derived from the 2p(3/2) electron orbital of the iron atoms.

The results shown in the section "[Graphitic-N]/[Total N]" in Table 2, and the results of the EXAFS measurement and the oxygen reduction activity evaluation described above revealed as follows. When the distance R between the atoms was 1.4 Å or less, and as the proportion of the component belonging to the nitrogen atoms doped into a graphite state was greater, higher oxygen reduction activity was ensured in both of the 0.5 M $H_2SO_4$ aqueous solution and the 0.1 M NaOH aqueous solution.

As shown in Fig. 7A and Fig. 7B, the peak top in the Fe2p(3/2) spectrum measured by XPS was less than 710 eV in each of the carbon-based materials (Samples A to C) of Examples 1 to 3. This indicates that the donation of electrons in the coordinate bond between nitrogen and iron is large in these examples. Namely, these examples showed large electron density of iron.

The results shown in Fig. 7A and 7B, and the results of the EXAFS measurement and the oxygen reduction activity evaluation described above revealed as follows. In the carbon-based materials (Samples A to C) of Examples 1 to 3, the distance R between the atoms resulted in 1.4 Å or less, and the peak top in the Fe2p(3/2) spectrum measured by XPS resulted in less than 710 eV. It was confirmed that the carbon-based materials (Samples A to C) of Examples 1 to 3 could ensure high oxygen reduction activity in both of the 0.1 M NaOH aqueous solution and the 0.5 M $H_2SO_4$ aqueous solution. Namely, these carbon-based materials exhibited high catalytic activity.

[4. Potential Cycle Test]

On the carbon-based materials (Samples A and B) of Example 1 and Example 2, a potential cycle test was performed having the same protocol of a load response test according to Fuel cell Commercialization Conference of Japan. The potential cycle test was implemented at 25°C.

The results of the potential cycle test are shown in the section "Deterioration after Potential Cycle Test" in Table 2. In particular, the carbon-based material (Sample A) of Example 1 showed that the current density reduction at 0.6 V vs. RHE resulted in 15% after 20,000 cycles, while the carbon-based material (Sample B) of Example 2 showed that the current density reduction resulted in 36%.

The results of the potential cycle test and the results of the XPS measurement revealed that, as the proportion of the component belonging to the nitrogen atoms doped into a graphite state measured by XPS was greater, the carbon-based material could exhibit higher durability in the potential cycle test. Namely, the higher durability in the potential cycle test can be achieved as the number of the nitrogen atoms replaced with carbon in the six-membered ring structure linked by the sp2 orbital was greater.

Thus, Examples 1 and 3 (Samples A and C) could exhibit high durability in which the component belonging to the nitrogen atoms doped into a graphite state measured by XPS was present in the proportion of 10% or greater and less than 50% of the total doped nonmetal atoms.

The carbon-based material according to the present embodiment has high catalytic activity and is easy to manufacture.

REFERENCE SIGNS LIST

1    FUEL CELL
13    CATHODE (ELECTRODE)
32    CARBON-BASED MATERIAL

**Claims**

1. A carbon-based material comprising:

    graphite or amorphous carbon particles;
    nonmetal atoms with which one of the graphite and the amorphous carbon particles is doped, the nonmetal atoms being nitrogen atoms; and
    metal atoms with which one of the graphite and the amorphous carbon particles is doped,
    wherein a distance between the metal atoms and the nonmetal atoms is 1.4 Å or less, and
    wherein a component belonging to the nonmetal atoms doped into a graphite state measured by X-ray photoelectron spectroscopy is present in a proportion of 10% or greater and less than 50% of the total doped nonmetal atoms.

2. The carbon-based material according to claim 1, wherein the nonmetal atoms include nitrogen atoms, and the metal atoms include at least one of iron atoms and cobalt atoms.

3. The carbon-based material according to claim 1, wherein, when the metal atoms include iron atoms, a peak top in an Fe2p(3/2) spectrum of the carbon-based material (32) measured by X-ray photoelectron spectroscopy is less than 710 eV.

4. An electrode catalyst comprising the carbon-based material (32) according to any one of claims 1 to 3.

5. An electrode comprising the carbon-based material (32) according to any one of claims 1 to 3.

6. The electrode according to claim 5 configured as a gas diffusion electrode.

7. An electrochemical device comprising the electrode according to claim 5 or 6.

8. A fuel cell comprising the electrode according to claim 5 or 6.

**Patentansprüche**

1.  Material auf Kohlenstoffbasis, umfassend:

    Graphit oder amorphe Kohlenstoffteilchen;
    Nichtmetallatome, mit denen eines aus dem Graphit und den amorphen Kohlenstoffteilchen dotiert ist, wobei die Nichtmetallatome Stickstoffatome sind; und
    Metallatome, mit denen eines aus dem Graphit und den amorphen Kohlenstoffteilchen dotiert ist,
    wobei ein Abstand zwischen den Metallatomen und den Nichtmetallatomen 1,4 Å oder weniger beträgt und
    wobei eine Komponente, die zu den Nichtmetallatomen gehört, die in einen Graphitzustand dotiert sind, wie durch Röntgenphotoelektronenspektroskopie gemessen, in einem Anteil von 10% oder mehr und weniger als 50% der gesamten dotierten Nichtmetallatome vorhanden ist.

2.  Material auf Kohlenstoffbasis nach Anspruch 1, wobei die Nichtmetallatome Stickstoffatome einschließen und die Metallatome mindestens eines aus Eisenatomen und Kobaltatomen einschließen.

3.  Material auf Kohlenstoffbasis nach Anspruch 1, wobei, wenn die Metallatome Eisenatome einschließen, eine Peakspitze in einem Fe2p(3/2)-Spektrum des Materials auf Kohlenstoffbasis (32), wie durch Röntgenphotoelektronenspektroskopie gemessen, weniger als 710 eV beträgt.

4.  Elektrodenkatalysator, umfassend das Material auf Kohlenstoffbasis (32) nach einem der Ansprüche 1 bis 3.

5.  Elektrode, umfassend das Material auf Kohlenstoffbasis (32) nach einem der Ansprüche 1 bis 3.

6.  Elektrode nach Anspruch 5, eingerichtet als Gasdiffusionselektrode.

7.  Elektrochemische Vorrichtung, umfassend die Elektrode nach Anspruch 5 oder 6.

8.  Brennstoffzelle, umfassend die Elektrode nach Anspruch 5 oder 6.


**Revendications**

1.  Matériau à base de carbone comprenant :

    du graphite ou des particules de carbone amorphes ;
    des atomes non métalliques avec lesquels un du graphite et des particules de carbone amorphes est dopé, les atomes non métalliques étant des atomes d'azote ; et
    des atomes métalliques avec lesquels un du graphite et des particules de carbone amorphes est dopé,
    dans lequel une distance entre les atomes métalliques et les atomes non métalliques est de 1,4 Å ou moins, et
    dans lequel un composant appartenant aux atomes non métalliques dopés dans un état de graphite mesuré par spectroscopie photoélectronique par rayons X est présent en une proportion de 10 % ou supérieure et inférieure à 50 % des atomes non métalliques dopés totaux.

2.  Matériau à base de carbone selon la revendication 1, dans lequel les atomes non métalliques incluent des atomes d'azote et les atomes métalliques incluent au moins un d'atomes de fer et d'atomes de cobalt.

3.  Matériau à base de carbone selon la revendication 1, dans lequel, lorsque les atomes métalliques incluent des atomes de fer, une pointe de pic dans un spectre de Fe2p(3/2) du matériau à base de carbone (32) mesurée par spectroscopie photoélectronique par rayons X est inférieure à 710 eV.

4.  Catalyseur d'électrode comprenant le matériau à base de carbone (32) selon l'une quelconque des revendications 1 à 3.

5.  Electrode comprenant le matériau à base de carbone (32) selon l'une quelconque des revendications 1 à 3.

6.  Electrode selon la revendication 5 configurée comme électrode de diffusion gazeuse.

**7.** Dispositif électrochimique comprenant l'électrode selon la revendication 5 ou 6.

**8.** Pile à combustible comprenant l'électrode selon la revendication 5 ou 6.

# FIG. 1

# FIG. 2

FIG. 3

```
      ┌──────────────┐
      │    START     │
      └──────────────┘
             │
             ▼
   ┌────────────────────┐
   │    MIXING STEP     │────S1
   └────────────────────┘
             │
             ▼
   ┌────────────────────┐
   │   HEATING STEP     │────S2
   └────────────────────┘
             │
             ▼
      ┌──────────────┐
      │     END      │
      └──────────────┘
```

FIG. 4

ELECTROLYSIS SOLUTION:
0.5 M $H_2SO_4$ AQUEOUS SOLUTION

## FIG. 5

ELECTROLYSIS SOLUTION:
0.1 M NaOH AQUEOUS SOLUTION

CURRENT DENSITY [mA/cm²]

POTENTIAL [V vs. RHE]

## FIG. 6

arb. unit

DISTANCE BETWEEN ATOMS [Å]

## FIG. 7A

## FIG. 7B

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006035186 A
- WO 2014006908 A1
- WO 2013089026 A1
- CN 101041431 A
- US 2011245071 A1

**Non-patent literature cited in the description**

- *Carbon,* 02 August 2010, vol. 48 (9), 2613-2624
- *Chem. Mater.,* 2011, vol. 23, 3421-3428
- *J. Power Sources,* 2011, vol. 196, 2519-2529
- Fuel cell Technology. The Institute of Electrical Engineers of Japan, Special Research Committee for Next-Generation Fuel cell Power Generation System. Ohmsha, Ltd, H17
- **WATANABE, K.** *J. Biosci. Bioeng.,* 2008, vol. 106, 528-536